Europäisches Patentamt

(19) European Patent Office

Office européen des brevets

(11) Publication number: **0 225 081 B1**

(12) **EUROPEAN PATENT SPECIFICATION**

(45) Date of publication of the patent specification: 31.10.90

(51) Int. Cl.⁵: **A23L 3/36, F25C 1/00**

(21) Application number: **86308775.5**

(22) Date of filing: **11.11.86**

(54) Method and apparatus for producing microfine frozen particles.

(30) Priority: **14.11.85 JP 255496/85**
**23.07.86 JP 173317/86**

(43) Date of publication of application:
**10.06.87 Bulletin 87/24**

(45) Publication of the grant of the patent:
**31.10.90 Bulletin 90/44**

(84) Designated Contracting States:
**DE FR GB**

(56) References cited:
**CA-A- 964 921**
**DE-A- 2 659 546**

**PATENT ABSTRACTS OF JAPAN, vol. 5,**
**no. 75 (C-55)[747], 19th May 1981; & JP - A - 56 23882**

(73) Proprietor: **TAIYO SANSO CO LTD., 1-1, Motomachi 2-chome, Naniwa-ku Osaka(JP)**

(72) Inventor: **Imaike, Sekiji, 218-438, Oaza Ogaito Kumatori-cho, Sennan-gun Osaka-fu(JP)**
Inventor: **Hata, Takeki, 5-1, Arinodai Kita-ku, Kobe-shi Hyogo-ken(JP)**
Inventor: **Yamazaki, Norio, 5-120, Higashiarioka, Itami-shi Hyogo-ken(JP)**

(74) Representative: **Ablett, Graham Keith et al, F.J. Cleveland & Company 40-43 Chancery Lane, London WC2A 1JQ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an improvement regarding a method and apparatus for the production of microfine frozen particles, that is to say, a technique which finds application in the processing of foods and pharmaceuticals and in the surface treatment of various objects.

In industries where fine ice particles are produced for the surface treatment of objects (ice blasting) and where quick-frozen particles are produced for the processing of foods, it has been convential practice to produce the particles as shown in Fig. l4. In this method, water or an aqueous liquid D is ejected from a sprayer C onto a static refrigerant liquid B, such as liquid nitrogen, contained in a vessel A. This method is disclosed in Japanese patents Toku Kai Sho 56-23882, Toku Koh Sho 49-48832. Thus frozen particles E are produced.

However, in this method of producing fine ice particles there exists a problem ion that, as shown in Fig. l5, the frozen particles adhere to one another to form a film F on the surface B' of the refrigerant liquid. This phenomemon is attributed in part to the fact that the frozen particles E have a density close to that of the refrigerant liquid B' and do not readily sink into refrigerant liquid. Consequently, the mist D falling successively from the sprayer C and freezing, overlies said film F of frozen particles in a manner of piling so that said film begins to sink into the refrigerant liquid surface B' only when the film has assumed a weight sufficient to force itself downwardly into the refrigerant liquid. Thus this conventional method fails to provide frozen particles in a state in which each particle is separate from another and the particles as a whole can be handled smoothly.

In an attempt to prevent the above-described piling, a revolving sprayer has been devised and a method wherein the surface of the refrigerant liquid is horizontally moved has been developed and disclosed in published Japanese patent Toku Koh Sho 49-48832. These devices, however, have been unable to fundamentally prevent problems relating to the formation of films of frozen particles and piling thereon of frozen mist and none of the methods have been successful in the attempt to produce microfine frozen particles with each particle separate from another to enable smooth and efficient handling, and by means of a small apparatus.

In the conventional apparatus wherein water or an aqueous liquid is atomized, the size of the frozen particles are changed by adjusting the nozzle opening and the liquid pressure. This adjustability of the size of the frozen particles, depending on adjustment of the nozzle opening and the liquid pressure, is limited to a very narrow range, and, moreover, it is troublesome to adjust the particle size in this way and the production of microfine frozen particles of less that 50 micrometers in particle diameter is impracticable.

The present invention has for its object to provide a means to solve the foregoing problems involved in the production of fine ice particles and frozen granules based on conventional methods, that is to say, primarily, (l) it is difficult to produce microfine frozen particles where each particle is reduced in dimensions, and to produce such particles in a state in which each is separate from the other and characterised by smoothness when handled, and (2) the adjustability in dimensions of the frozen particles is limited to a narrow range and the production of microfine frozen particles with sizes of less than 50 micrometers is impracticable.

According the one aspect of the invention there is provided a method of producing microfine frozen particles comprising the steps of:- directing an atomised mixture of a liquid and a gas toward a refrigerant liquid while the refrigerant liquid is given kinetic energy so that ripples are formed at the surface, and collecting the microfine frozen particles produced thereby from said refrigerant liquid. The particles of the atomised fluid mixture thus directed are scattered and disintegrate into smaller particles because of the gaseous expansion of the gas in each particle released in a gaseous atmosphere. The particles of water or an aqueous liquid with reduced dimension assume a globular shape while falling because of surface tension, and they then freeze to solid particles when they reach the surface of the refrigerant liquid. The particle size of the frozen particles can be varied by adjusting the gas-to-liquid ratio of the atomised fluid mixture as well as the pressure applied to said fluid mixture for the atomisation through a nozzle. The ripples of the refrigerant liquid at its surface, made by kinetic energy, stir the frozen particles at the surface so that these particles are prevented from adhering to one another to form a film and help them to sink easily.

The formation of ripples in the refrigerant liquid at its surface virtually enlarges the surface of said refrigerant to avail the process and, therefore, makes it possible to reduce the scale of a refrigerant vessel.

According to another aspect of the invention there is provided apparatus for producing fine frozen particles comprising a vessel for containing a refrigerant liquid, means for making ripples at the surface of the refrigerant liquid, an atomiser for atomising toward said refrigerant liquid a mixture of a liquid to be frozen and a gas , and means for collecting frozen particles out of the refrigerant liquid in said vessel.

Thus, the present invention provides a method and an apparatus which, in conjunction with each other, make it possible to btain microfine frozen particles which are each separate from each other just like dried sand without sticking to one another.

The present invention also enables a reduction in the scale of apparatus employed by introducing a method wherein the formation of ripples of a refrigerant liquid at the surface virtually enlarges the refrigerant surface area required for freezing the particles falling thereon so that the horizontal cross section of the refrigerant vessel can be reduced. At the same time it is possible to produce microfine frozen particles with sizes of less than 50 micrometers being separate from one another which has been impossible to produce in any conventional method.

Furthermore, the present invention makes it possible to efficiently produce such particles with sizes ranging from 30 - 300 micrometers by introducing a method whereby the particle can be varied to a desired range of size in the ratio of size of about one to ten by adjusting the gas-to-liquid ratio of a fluid mixture.

Preferably, the kinetic energy is provided to the refrigerant liquid by spouting a gas or a liquid into said refrigerant liquid or onto the surface thereof. Alternatively, one or more oscillators can be provided on the inside of the vessel to give kinetic energy or one or more vibrators can be provided inside the refrigerant liquid. Finally, the vessel can itself be shaken to provide the kinetic energy. Conveniently, the kenetic energy is provided to the upper l0 cms of the refrigerant liquid, and conveniently the ripples formed in the refrigerant liquid at the surface have wave heights of 5 to l0 mm. The method of producing the aformentioned kenetic energy can comprise a gas spouting tube designed to spout the gas or can comprise an oscillator provided on the inside or outside of the vessel or can comprise of vibrator or vibrators immersed in the refrigerant liquid. The gas spouting tube can also be designed to spout a gas onto the surface of the refrigerant liquid.

Conveniently, the temperature of the atmosphere inside the refrigerant vessel is maintained below - 20°C and the atomiser can consist of a device for mixing a liquid with a gas and a nozzle connected thereto for atomisation.

Examples of the present invention will now be described with reference to the accompanying drawings in which:-

Fig. l is a flowchart illustrating a production system for microfine frozen particles as an embodiment of the present invention.

Fig. 2 is a plan view showing a gas spouting tube 3a in position.

Fig. 3 is a side view of the gas spouting tube 3a shown in Fig 2.

Fig. 4, consisting of four different drawings 4A, 4B, 4C and 4D, illustrates other ripple-making devices embodying the present invention.

Fig. 5 illustrates gas bubbles in action as spouted from a gas spouting tube 3a.

Fig. 6 show a cross section of an example of an atomiser 4 in a longitudinal cutaway representation.

Fig. 7 illustrates an example of a means for collecting microfine frozen particles.

Fig. 8 shows curves representating the correlation between the particle size of microfine frozen particles and the flow rate of a gas (nitrogen gas) to be mixed therewith.

Fig. 9 illustrates a magnified (l50 x) photographic representation of microfine frozen particles obtained according to the present invention.

Fig. l0 illustrates a magnified (l50 x) photographic representation of fine frozen particles which were obtained when ripples were not formed and the liquid for freezing was used without mixing with a gas.

Fig. ll schematically illustrates a different type of means for collecting microfine frozen particles, which embodies the present invention, in a cross sectional representation.

Fig. l2A specifically illustrates a means for generating bubbles as a part of the means for collecting microfine frozen particles shown in Fig. ll in an enlarged cross sectional representation.

Fig. l2B shows an alternative form of the means for generating bubbles illustrated in Fig. l2A.

Fig. l3 is a diagram showing the depth of submersion of a means for collecting microfine frozen particles as a function of the distance over which the microfine frozen particles are drawn upward for collection and the quantity of the gas injected.

Fig. l4 schematically shows an example of a conventional apparatus for producing fine frozen particles.

Fig. l5 illustrates how fine frozen particles come together to form films in the production by a conventional method.

Fig. l shows a flowchart of an apparatus for producing microfine frozen particles as an embodiment of the present invention wherein a refrigerant vessel is denoted by l, a refrigerant liquid contained therein by 2, a means for making ripples on the refrigerant liquid at the surface by applying kinetic energy thereto by a means 3, an atomiser for mixing a liquid with a gas and disintegrating the mixture into fine particles 4, a means for controlling the refrigernat level 5, a means for collecting microfine frozen particles 6, a means for cooling the liquid to be frozen and the gas to be mixed therewith 7, a refrigerant liquid supply tank 8, a supply tank for feeding the liquid to be frozen 9, and a gas storage for feeding the gas to be mixed therewith l0.

The refrigerant vessel l is a square-bodied vessel of stainless steel "Japan Industrial Standard Code No G4304 Type SUS304, Code No G4305 Type SUS304, Code No G4306 Type SUS304 or Code No G4307 Type SUS304. The lower part is conically tapered toward the bottom. The vessel l in the example described herein measures 400 mm by 400 mm horizontally and l,200 mm vertically, all in external dimensions. All the exterior sides are overlaid with vacuum insulator (not shown).

A refrigerant liquid 2 is contained in the refrigerant vessel I which, in the example, is liquid nitrogen supplied from the refrigerant liquid supply tank 8 through a refrigerant supply conduit II, and the refrigerant level L is maintained at a height of about 500 mm from the bottom.

The level L of the refrigerant liquid is always maintained at a set point by means of a refrigerant level control unit 5 comprising a level detector 5a, a level control board 5b, a level control valve 5c, etc.

Not only is liquid nitrogen suitable for use as a refrigerant liquid 2, as in the example, herein, but also a liquified gas such as liquid air or liquified carbon dioxide gas can be used for the purpose. Alternatively, an organic solvent which is insoluable in water and has a low melting point, e.g., hexane when cooled by a refrigerant (not shown) to a temperature below 0°c, is also suited to the same purpose.

Said means for making ripples 3, comprises a gas spouting tube 3a, a gas flow regulating valve 3b, a flow meter 3c, etc., which are designed to make ripples in the refrigerant liquid at the surface by applying kinetic energy thereto.

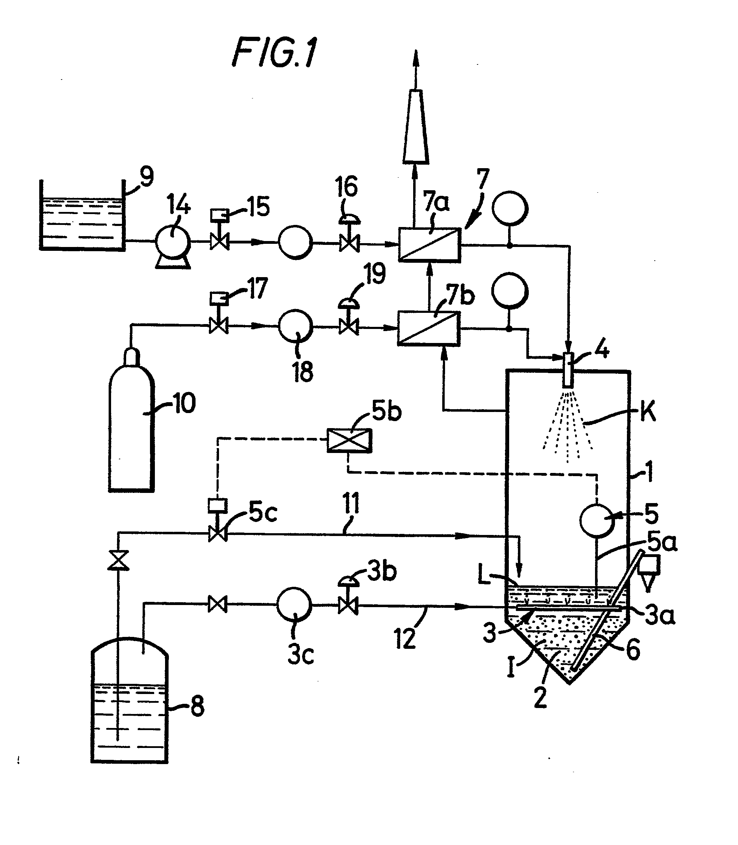

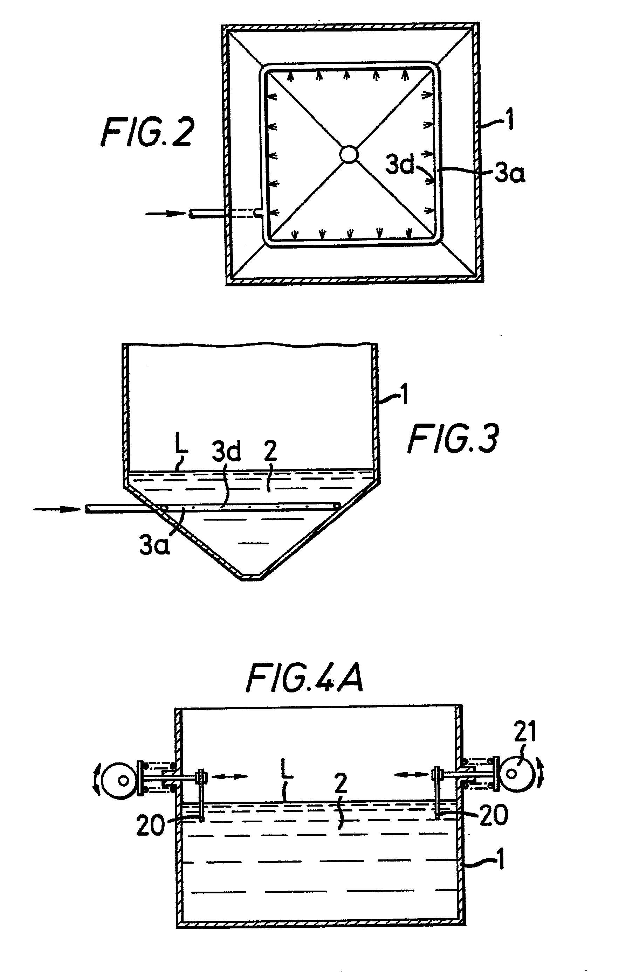

As shown in Fig. 2 and Fig. 3, the gas spouting tube 3a is substantially in a shape of a square and is located horizontally at a position 40-I50 mm below the level of the refrigerant liquid. The gas spouting tube 3a should preferably be placed at a depth within I00 mm from the level of the refrigerant liquid. If the gas spouting tube 3a is placed too deep, the gas spouted therefrom is cooled so that the effect of bubbles is lessened, as will be understood hereinafter and the consumption of both the refrigerant liquid and the spouted gas (refrigerant gas) is increased.

The gas spouting tube 3a has gas spouting nozzles 3d opened at a pitch of 50-I00 mm, each nozzle is bored substantially horizontally and inwardly. The refrigerant gas is supplied thereto from the vapor phase in the refrigerant liquid supply tank 8, through a refrigerant gas supply conduit I2 and a gas flow regulating valve 3b, and spouted from said nozzles- 3d into the refrigerant liquid.

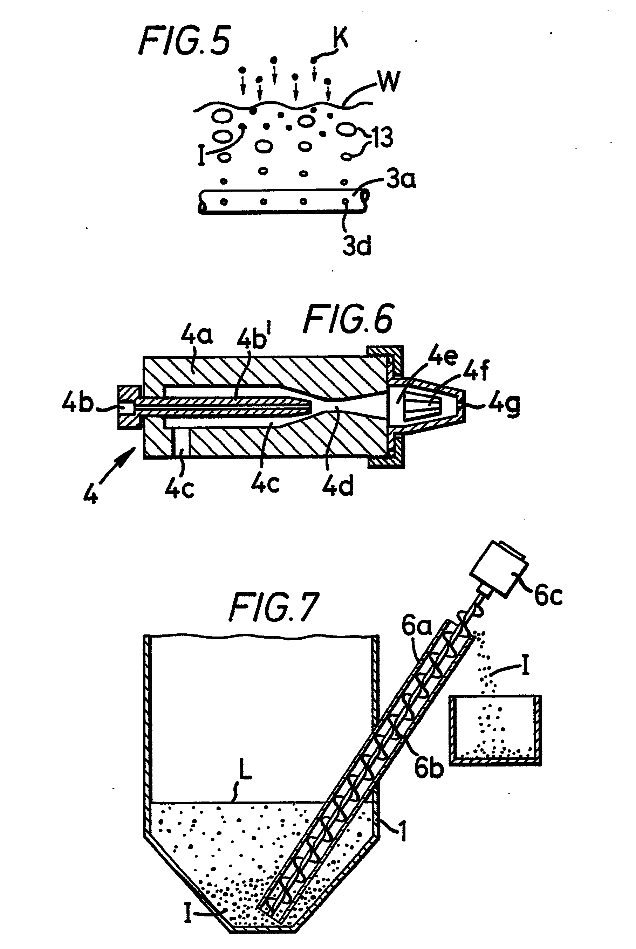

The optimal flow rate at which the refrigerant gas is spouted from said gas spouting tube 3a is within 200-400 l/m² per minute. As shown in Fig. 5, the refrigerant gas spouted therefrom forms flows of bubbles I3 rising toward the surface of the refrigerant liquid, and as they rise close to the surface, the bubbles burst. The kinetic energy that is generated by these flows of bubbles and thus applied to the refrigent liquid at the surface causes the refrigerant liquid to form ripples W with a wave height ranging 5-20 mm at the surface and frozen particles I which have fallen onto and into the refrigerant liquid 2, one particle in contact with another, are stirred by the ripples so that they are prevented from adhering to one another.

The density of the refrigerant liquid 2 at the surface is lowered by the presence of such bubbles, the difference in density between the frozen particles and the refrigerant liquid being increased, and, as a result, the frozen particles sink easily into the refrigerant liquid.

The optimal wave height of said ripples is within the range of 5-I0 mm. If the wave height exceeds 20 mm, the stirring action at the surface of the refrigerant liquid becomes an obstacle to the sinking of frozen particles.

Whereas, in the example described herein, the ripple-making means 3 has the gas spouting tube 3a supplied with a refrigerant gas from the vapor phase in the refrigerant liquid supply tank 8, it is equally practical to have a refrigerant gas supply tank installed separately to draw the refrigerant gas therefrom to the gas spouting tube 3a. The invention permits, instead of the refrigerant gas referred to herein, the use of any gas, such as air devoid of $CO_2$, other than those having low condensation points or containing $CO_2$.

The ripple-making means 3 in the foregoing description can be substituted by an alternative, some of these alternatives are described hereunder.

(a) Liquid Spouting Tube for making ripples

A liquid spouting tube with spouting nozzles bored therein can be placed in the refrigerant liquid with the refrigerant liquid supplied thereto from a refrigerant liquid supply tank 8. Instead of the refrigerant liquid supply conduit II shown in Fig. I, this alternative requires a refrigerant liquid return pipe as part of the means to maintain the level of the refrigerant liquid at a set point.

(b) Vibrator type ripple-making means

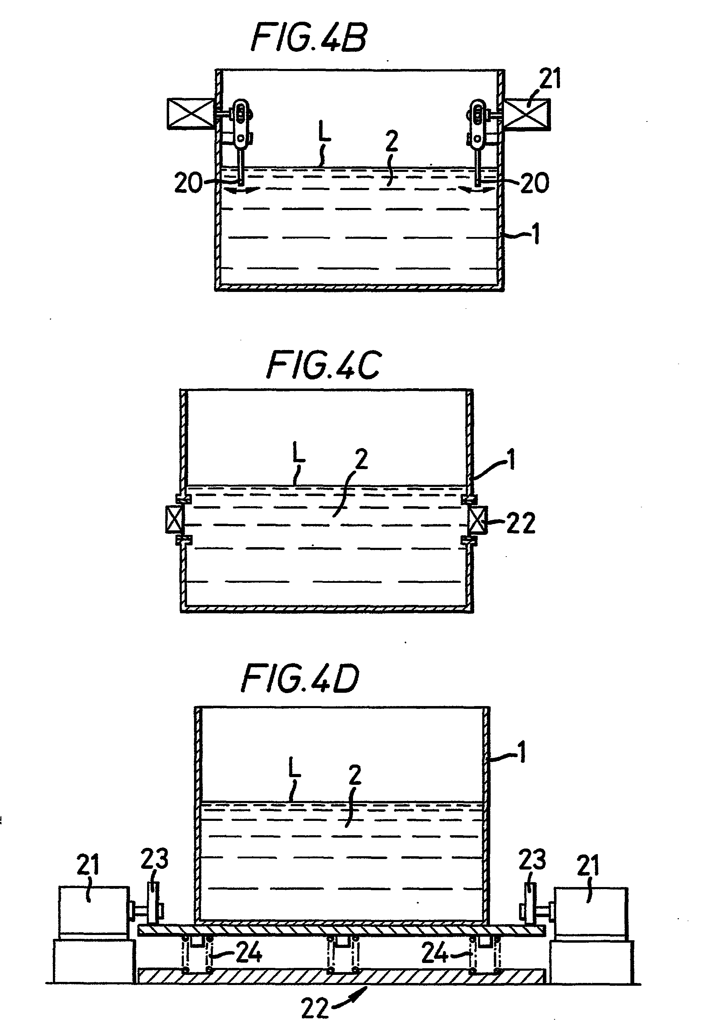

As shown in Fig. 4A and Fig. 4b, vibrators 20, designed to move regularly in a swinging, reciprocal or rotational motion, can be placed inside the refrigerant vessel I in combination with motors 2I or the like therefor mounted on said vessel I at the outside. By activating the vibrators by means of said motors 2I or the like the refrigerant liquid 2 can be given mechanical vibrational energy so that the refrigerant liquid forms ripples at the surface L.

(c) Oscillator type ripple-making means

As shown in Fig. 4C, sonic oscillators 22 designed to perform oscillation in a desired frequency as transducers can be mounted on the refrigerant vessel I either at the inside or at the outside. By activating the oscillators 22 the refrigerant liquid 2 is given sonic energy so that the refrigerant liquid forms ripples at the surface L.

4

(d) Jet Blow type ripple-making means

A jet blow tube can be placed over the refrigerant liquid 2 as a means for blowing onto the the surface L of the refrigerant liquid therefrom a refrigerant liquid in jets or a gas in jets, such as a refrigerant gas or gas with a relatively high condensation point, e.g., air devoid of $CO_2$. By blowing such jets onto the surface of the refrigerant liquid 2 the refrigerant liquid is given kinetic energy so that the refrigerant liquid forms ripples at the surface L.

(e) Shaking type ripple-making means

A refrigerant vessel I can be mounted on a shaking stand 22 or the like with a mechanism, including cams 23, springs 24 or the like, for giving the refrigerant vessel I a mechanical shaking motion. By activating this mechanism the refrigerant liquid 2 is given a shaking motion so that the refrigerant liquid forms ripples at the surface L.

Said atomizer 4 is designed to mix the liquid to be frozen with a gas and then atomize the liquid into fine particles. Fig. 6 illustrates an example of such an atomizer, which has a liquid inlet 4b and a gas inlet 4c at the back of an atomizer body 4a and passages 4b' and 4c' leading respectively therefrom to a throat 4d where the two passages meet so that a liquid and a gas are mixed therein. The throat 4d opens to a mixing chamber 4e with a set of guide vanes 4f therein so that a liquid gas mixture formed at the throat 4d is led into the mixing chamber where said mixture is stirred and homogenized by means of the guide vanes 4f and then ejected out of the atomizer through a nozzle 4g.

It goes without saying that, besides the atomizer 4 described as an example herein, this invention permits the use of any other atomizer differing in structure or shape as far as it has a mixing mechanism for a liquid and a gas and a mechanism to homogenise the mixture into fine particles at ejection.

The liquid to be frozen, that is to say, water, fruit juices, drugs, etc., is fed from the liquid supply tank 9, through a pump 14, a pressure-reducing valve 15, a control valve 16, the cooling means 7 and the like, and into the atomizer 4 through the liquid inlet 4b, and the pressure under which the liquid is thus fed is 1.0-2.0 kg/cm$^2$ G in the example described herein.

The gas to be mixed with said liquid, which is of a type that shows a relatively poor solubility in the liquid, is fed from the gas feeding storage 10, through a pressure-reducing valve 17, a flow meter 18, a control valve 19 and the cooling means 7, and into said atomizer 4 through the gas inlet 4c, and the pressure under which the gas is thus fed is 1.0-2.0 kg/cm$^2$ G in the example described herein.

In this example, water as the liquid to be frozen and a refrigerant gas (nitrogen gas) as the gas to be ejected therewith were fed into each under the pressure of 1.0 kg/cm$^2$ G Whereas the example describes an embodiment with a separate gas storage 10 for the gas to be mixed, the atomizer 4 can be fed with the gas for the mixing from the vapor phase in the refrigerant liquid supply tank 8.

The optimal mixing ratio of the liquid and the gas, both to be atomized together, being

$$\frac{\text{liquid l/hr}}{\text{gas Nl/min.}}$$

is within 0.5-1.5. By changing this mixing ratio the particle size of the frozen particles can be varied in the range from one to one-tenth without changing the feeding pressure applied to the liquid and the gas. Although it is advantageous in practice to make the diameter of the nozzle 4g as small as possible insofar as the effect is considered, consideration of difficulty in drilling and liability to clogging makes it advisable to employ an atomizer with a nozzle whose diameter is within 0.3-1.0mm .

The liquid and the gas mixed in the throat 4d and in the mixing chamber 4e in the atomizer 4 are evenly mixed by the guide vanes 4f and the resultant homogeneous mixture is atomized through the nozzle 4g onto the surface L of the refrigerant liquid. When this mixture is passed through the nozzle 4g, the gas mixed therein is present both within the particles of the atomized mixture as well as between each particle. Thus, the expansion of the gas contained in the particles makes the particles disintegrate into even smaller particles whilst being blown in jets, whereas the gas bubbles present between each particle adds to the scattering force of the particles blown in jets so that the particles collide against one another and disintegrate into smaller particles.

Each of the liquid particles K ejected from the atomizer 4 assumes a globular form under surface tension while falling in the refrigerant vessel I toward the refrigerant liquid. The drop between the atomizer 4 and the surface L of the refrigerant liquid, as well as the temperature of the atmosphere inside the refrigerant vessel, are factors greatly influencing the particle size of the fine frozen particles and their shape. According to experiments, it is advisable to make the drop somewhere within 500-1,500 mm and to make the temperature of the atmosphere inside the refrigerant vessel somewhere below -20°C.

EP 0 225 081 B1

Said refrigerant level-controlling means 5 functions to maintain an appropriate drop between the atomizer 4 and the surface L of the refrigerant vessel in conjunction with a liquid level detector (a known device) 5a, a liquid level controller 5b, a control valve 5c interposed in the refrigerant liquid supply conduit II, etc.

Since the level of the refrigerant liquid constantly changes with the ripples, the liquid level is controlled by maintaining the ridges of the ripples within a set range.

Said cooling means 7 lowers the temperature of the liquid to be frozen and the temperature of the mixing gas, both introduced into the refrigerant vessel I through the atomizer 4, and is so designed as to economize the consumption of the refrigerant liquid. This cooling means 7, comprising a cooler 7a for liquid and a cooler 7b for gas, and is designed to draw refrigerant gas from the refrigerant vessel I for the cooling function.

Whereas, in the example described herein, the liquid and the gas are separately cooled and then mixed and atomized by an atomizer 4, this invention permits the practice in different forms of the procedure, for example, a procedure in which the mixing step is separated from the atomization so that the liquid and the gas are mixed first, then the mixture is cooled, and the cooled mixture is atomized.

The microfine liquid particles K, falling from the atomizer 4 toward the refrigerant liquid, freeze into hard particles as they reach the surface of the refrigerant liquid. The ripples at the surface thereof prevent these particles from adhering to one another to form films so that these particles sink separately into the refrigerant liquid. The particles which have thus sunk to the bottom of the refrigerant vessel I are then carried out of the refrigerant liquid 2 by means of a carrying means 6.

In the example described herein, said carrying means 6, as shown in Fig. 7, comprises essentially a guide pipe 6a mounted on the refrigerant vessel I in the manner of insertion, a screw rotor 6b rotatably held within said guide pipe, and a drive motor 6c. This carrying means continuously carries the frozen particles I out from the bottom of the refrigerant vessel I.

There is now described hereunder the results of tests wherein microfine frozen particles were produced by an installation described herein as an example embodying the present invention.

The refrigerant vessel I consisted of a square-bodied vessel measuring 400 mm by 400 mm horizontally and 900 mm vertically and whose four sides were downwardly extended to an additional height of 300 mm in a shape conically tapering toward the bottom. The vessel contained liquid nitrogen as the refrigerant liquid 2 to a height of 500 mm from the bottom so that the distance from the ceiling of the vessel to the surface L of the refrigerant liquid was 700 mm.

Inside the vessel, a gas spouting tube extending peripherally and horizontally in the form of a square (350 mm by 350 mm) was placed at a position 50 mm below the surface of the refrigerant liquid, and supplied with nitrogen gas from the vapor phase in the liquid nitrogen supply tank at the flow rate of 300 l/m² per minute so that by spouting the gas from the tube inwardly through nozzles the liquid nitrogen as the refrigerant liquid was made to form ripples at the surface whose wave height was 8 mm on the average.

The fluid to be atomized consisted of water as the liquid to be frozen and nitrogen gas (25°C) supplied from a high pressure storage vessel as the gas to be mixed therewith. These two components were mixed under a pressure of I.2 kg/cm² G and by regulating the flow rate of the nitrogen gas at 4.5 Nl/min. the mixture was atomized through a nozzle of 0.5 mm in diameter toward the refrigerant liquid below (the atomizer was placed about 700 mm above the surface L of the liquid nitrogen) The atomization rate was 6 l/hr The maximum temperature of the atmosphere in the refrigerant vessel was -20°C.

The refrigerant vessel was supplied with liquid nitrogen at the flow rate of 20 l/h for replenishment in order to maintain the surface of the liquid nitrogen at a set level and the cooling means to cool water and nitrogen gas to be atomized together was supplied with vaporized nitrogen gas, that is to say, the gas discharged from the refrigerant vessel and introduced for the cooling, at the rate of 20 × 0.65 Nm³/ hr

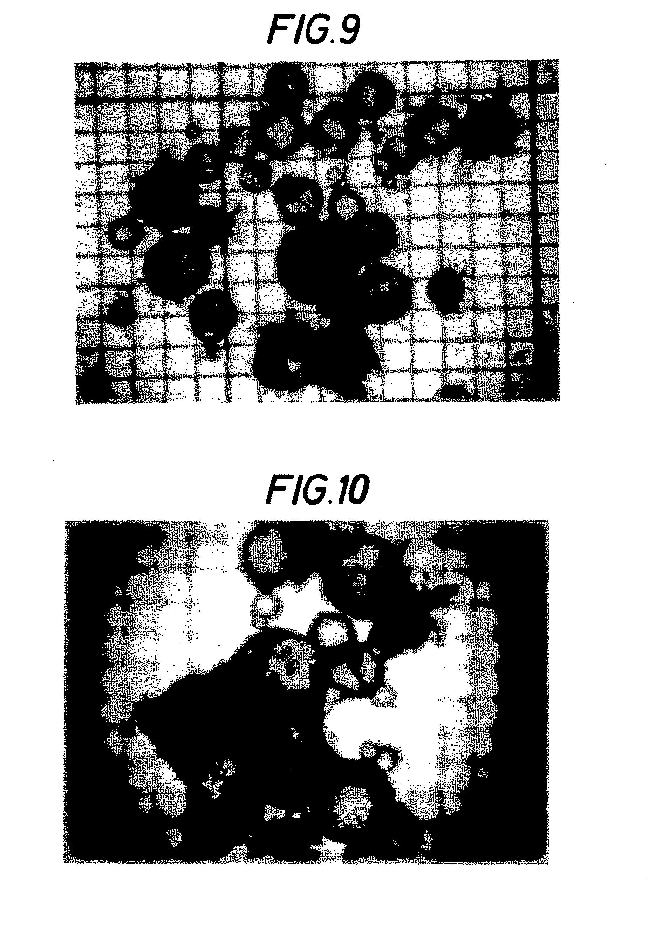

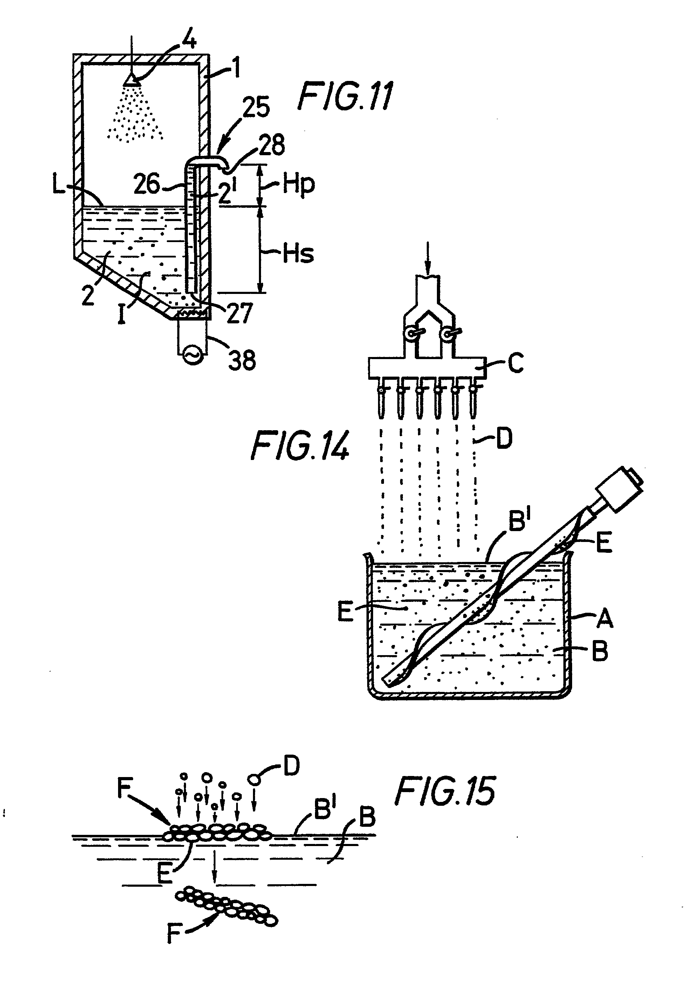

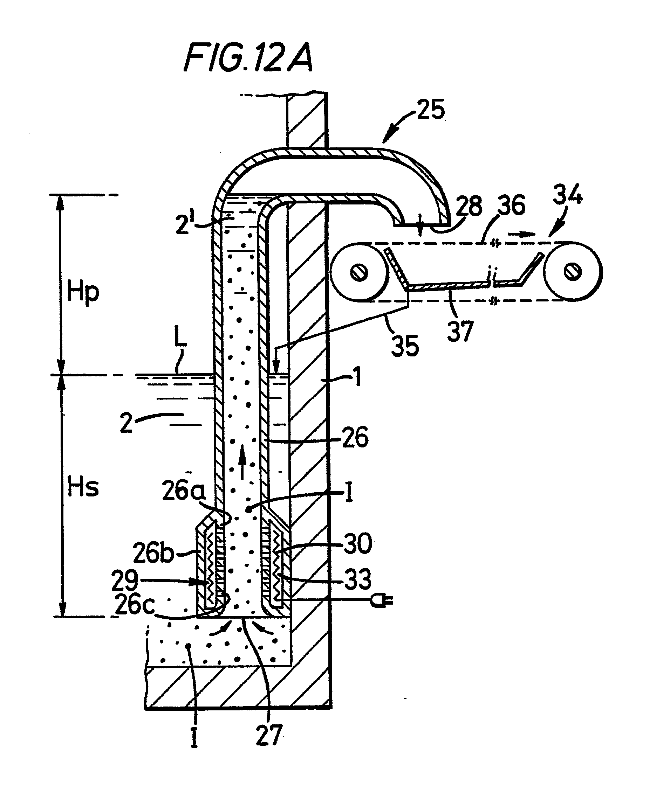

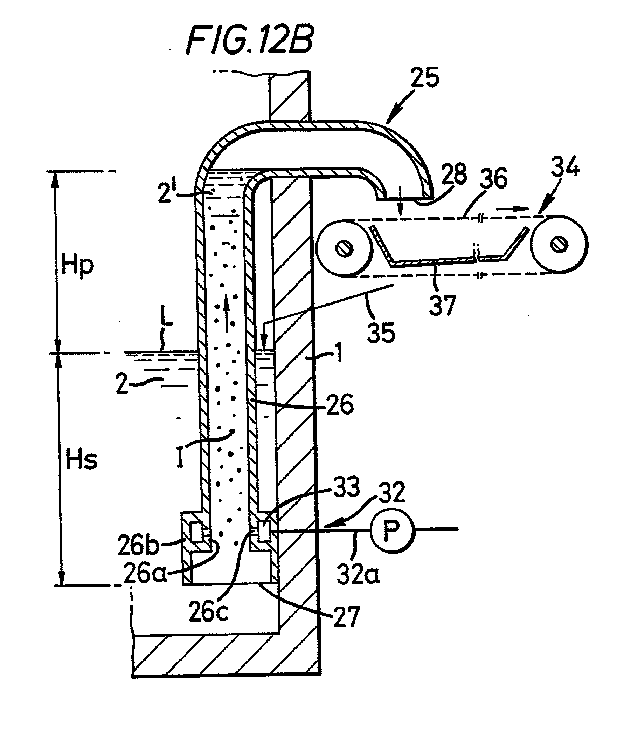

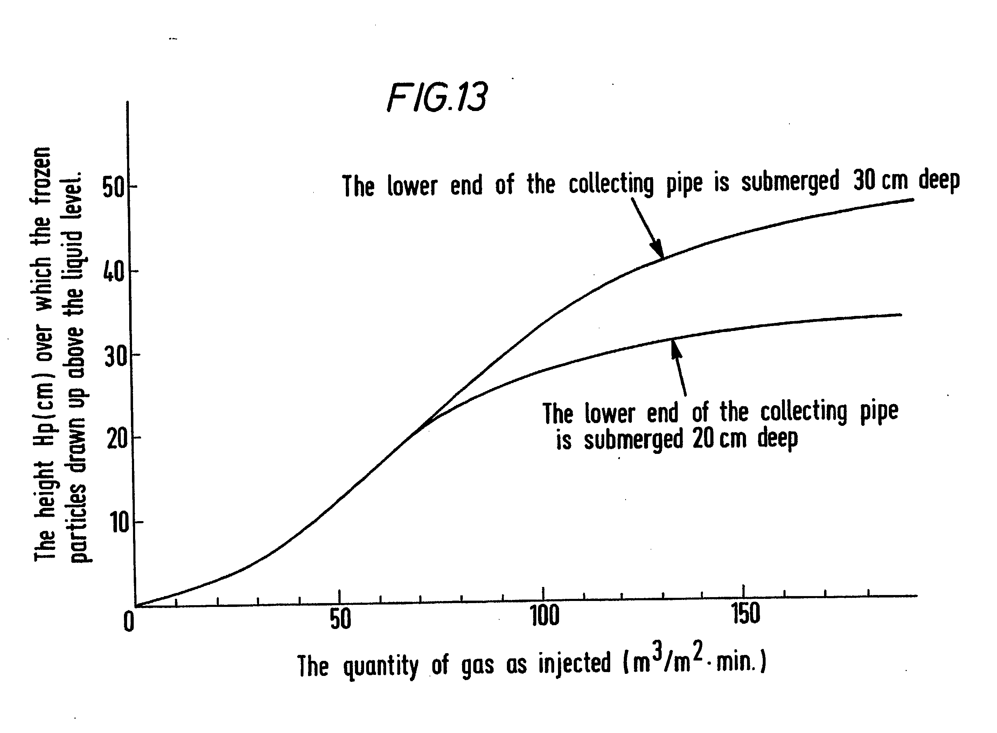

Under the conditions set as described above, a mixed fluid (water and nitrogen gas) continuously atomized for about I0 minutes yielded about one liter of microfine frozen particles (ice particles) with particle sizes averaging within 70-80 $\mu$ m. Each of these particles was distinctly separated from another, as shown by Fig. 9 illustrating some of them in a drawing of a magnified (I50 x) microscope photograph, whereas particles were obtained in forms of scales of films when no gas had been mixed with the liquid in atomizing and no ripples of the refrigerant liquid had been formed at the surface, as shown by Fig. I0, illustrating such specimens in a drawing of a magnified (I50 x) microscope photograph. Thus a marked difference existed between the frozen particles obtained according to the present invention and those obtainable by conventional methods.

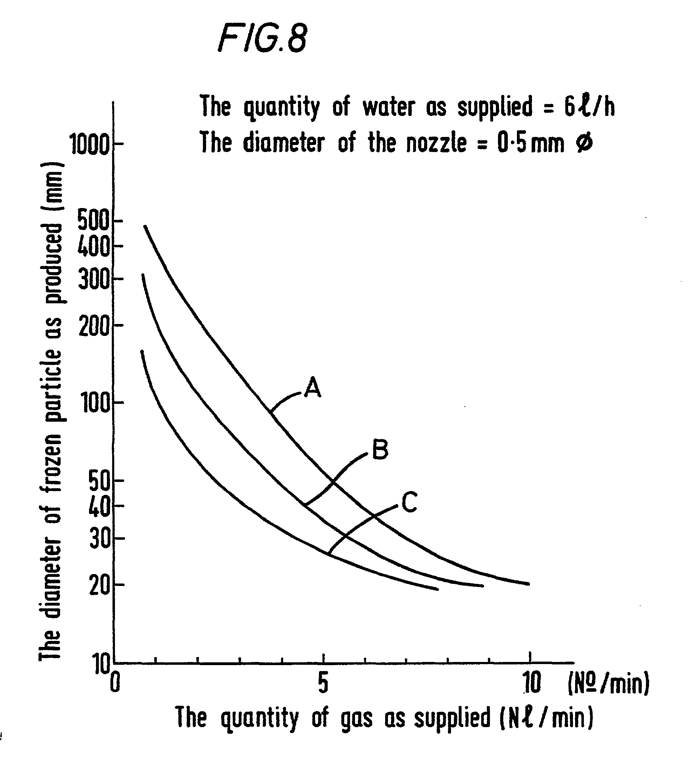

Fig. 8 shows dimensional changes of the microfine frozen particles as a function of the discharge pressure under which the mixed fluid is atomized and also of the flow rate of nitrogen gas fed into the atomizer for mixing with the liquid. In the diagram, the curve A represents changes under a discharge pressure of I kg/cm² g the curve B under a discharge pressure of I.5 kg/cm² g, and the curve C under a discharge pressure of 2 kg/cm² gWater alone, atomized without mixing a gas therewith, yielded particles with sizes about 400 $\mu$m under a discharge pressure of I kg/cm² g, about 320 $\mu$m under a discharge pressure of I.5 kg/cm² g, and about 280 $\mu$m under a discharge pressure of 2 kg/cm² g, the particle size representing an average for each different discharge pressure.

With respect to a means for carrying frozen particles 6 out of the refrigerant liquid, the present invention permits, besides a screw conveyor as in the example described herein, the use of a belt convey-

6

or or a device of any other mechanical type suitable for the purpose. For example, it is practical for the same purpose to employ a device based on the principle of the air lift pump, as illustrated hereunder.

Referring to Figs. II, I2A and I2B, there are shown some such means 25, each of which comprises a pipe 26 (e.g. I0$^A$ SUS pipe) for drawing frozen particles upward and away placed vertically with the lower portion submerged in the refrigerant liquid and having a suitable diameter. A bubble-generating device 29 in Fig. I2A and 32 in Fig. I2B is provided for generating bubbles in the refrigerant liquid 2' which is refrigerant liquid in a portion of said pipe 26. A means 34 for separating frozen particles from the refrigerant liquid is provided with a return pipe 35 for sending back thus separated refrigerant liquid into the vessel I. The lower part of the refrigerant vessel I is tapered or rounded to a narrow bottom where the lower end of said pipe 26 is positioned, which has a stirring heater 38 attached.

Said pipe 26 has its inlet 27 positioned at a distance Hs below the level L of the refrigerant liquid and its outlet 28 at a distance Hp above said level L with its adjacent portion of the pipe extended outwardly out of the refrigerant vessel I so that said outlet is open downwardly. The lower end portion of said pipe 26 consists of a double layer tube, the internal tube 26a being the same as the main portion of the pipe 26 in diameter and the external tube 26b enclosing said internal tube 26a with a space opened therebetween, and a plurality of small holes 26c are opened through the internal tube 26a.

Said bubble-generating means 29 is a heater for applying thermal energy to the refrigerant liquid 2' within said pipe 26 and said bubble-generating means 32 is an injector for injecting a gas into the refrigerant liquid 2'.

As shown in Fig. I2A, a bubble-generating heater 29 comprises a heater 30, such as an electrio coil heater, which is placed in the circular space 33 between the internal tube 26a and the external tube 26b. The refrigerant liquid 2' in the pipe 26, when heated, forms bubbles by vaporization, causing its apparent specific gravity to decrease, and, as a result of a difference in specific gravity between the refrigerant liquid 2' inside and 2 outside said pipe 26 respectively, there is formed a rising current containing bubbles in the refrigerant liquid 2' in the pipe.

As shown in Fig. I2B, a bubble-generating gas injector 32 consists of a gas-feeding pipe 32a which is led into a circular space 33 at the lower end of the pipe 26 and designed to send a suitable gas, such as nitrogen gas, into the refrigerant liquid 2' inside the pipe through a small hole 26c. The refrigerant liquid 2' forms a rising current containing bubbles, as in the case of heating, above, when a gas is sent in.

The positioning of the frozen particle-removing means 25, with respect to all its constituent parts including the collecting pipe 26, is so arranged that, when the bubble-generating means 29 or 32 is working, the liquid head pressure between the position of said bubble-generating means and the liquid level L in the refrigerant vessel I is large relative to the liquid head pressure between the position of said bubble-generating means and that of the outlet 28 at the upper end of said collecting pipe 26.

The bubbles generated in the refrigerant liquid 2' inside the frozen particle-collecting pipe 26, when either the heater 29 or the gas feeder 32 is working, rise together with the liquid adjacent to them, thus forming a rising current inside said collecting pipe 26. As a result, the apparent specific gravity $\gamma'$ of the refrigerant liquid 2' inside said pipe 26 is lowered from the specific gravity $\gamma$ of the refrigerant liquid 2 in the vessel I in proportion to the volume of the bubbles generated, and there arises a distinct difference in liquid level between the refrigerant liquid 2 outside the pipe and inside the pipe, the liquid 2' inside assuming a higher level than the liquid 2 outside.

The specific gravity of the refrigerant liquid 2 in the vessel I represented as $\gamma$ and the apparent specific gravity of the refrigerant liquid 2' inside the collecting pipe 26 as $\gamma'$, and the distance between the level of the refrigerant liquid 2' inside the collecting pipe 26 and that L of the refrigerant liquid 2 in the vessel I, that is to say, the height over which the frozen particles are drawn up above the liquid level L, is Hp and the distance between the lower end (inlet) 27 of the collecting pipe 26 and the liquid level L in the vessel I as Hs. The following equation exists as the pressure equilibrium at the lower end (inlet) 27 of the collecting pipe 26:

$( \gamma \times Hs = \gamma' \times (Hs + Hp))$ therefore, as a means to find Hp, an equation

$Hp = Hs \times (\gamma - \gamma') / \gamma'$ is obtainable. It follows from this that Hp can be increased by increasing Hs.

The apparent specific gravity of the refrigerant liquid 2' inside the collecting pipe 26 can be obtained by the following equation:

$\gamma' = \gamma \times Vw / (Vw + Vg)$ wherein Vw represents the quantity of the refrigerant liquid 2' in the collecting pipe 26, and Vg represents the volume of the bubbles generated therein, e.g., the gas injected therein.

A frozen particle-collecting means 25 positioned according to the above description permits the refrigerant liquid 2' inside the collecting pipe 26 to be discharged through the outlet 28. Under this condition, when the production of frozen particles I is started, the frozen particles are drawn into the collecting pipe 26, assume the form of slurry together with the refrigerant liquid 2', and discharge through the outlet 28.

As has been described, the difference in liquid levels between the refrigerant liquid 2' inside the collecting pipe 26 and 2 in the vessel I is enlarged as the length Hs of the collecting pipe 26 below the liquid level is increased. On the other hand, the discharge from the collection pipe 26 varies with the quantity of the refrigerant gas generated by the heater 29 or the gas injected from the gas feeder 32. Fig. I3 shows an example of the correlation that exists among Hp, Hs and the quantity of the gas injected in the production of ice particles with sizes less than 500 μm by heat exchanging with liquid nitrogen.

Needless to say, it is advisable to formulate the quantities of the refrigerant gas to be generated or those of the gas to be injected in relation to the sizes of the frozen particles l, differences in specific gravity between the frozen particles l and the refrigerant liquid 2', and the like. For example, for the production of ice particles with sizes less than 500 μm by heat exchanging with liquid nitrogen, it is recommended to set the quantities of the refrigerant gas to be generated or those of the gas to be injected at over 85 Nm³/min. per unit of the cross sectional area of the collecting pipe 26. In this case the ice particles can be collected satisfactorily unless they are contained in the refrigerant liquid 2 in the vessel l in quantities exceeding 50% by weight.

As shown in Fig. l2A and Fig. l2B, the means 34 for separating frozen particles from the refrigerant liquid according to the example described herein comprises essentially a mesh conveyor 36 one end of which is under the outlet 28 constituting the upper end of the collecting pipe 26 and a tray 37 for receiving the refrigerant liquid which is placed under and extends in the travelling direction of said mesh conveyor 36. There is a return pipe 35 connecting said tray 37 to the refrigerant vessel l for conveying refrigerant liquid. This frozen particle-separating means is so designed that the refrigerant liquid 2' and a slurry of frozen particles l and refrigerant liquid 2' discharged from said outlet 28 are loaded onto the mesh conveyor 36 and thence the frozen particles are carried away thereby while the refrigerant liquid 2' loaded thereon is separated from the frozen particles l by passing through the mesh conveyor 36, received by said tray 37, and sent back into the refrigerant vessel l through said return pipe 35.

Frozen particle-collecting means 25 embodying the present invention proved efficient in tests as follows.

A frozen particle-collection pipe 26 was placed in a refrigerant vessel l at a position where Hs (distance between the liquid level L in the vessel l and the lower end (inlet) 27 of the collecting pipe 26) was 300 mm and Hp (distance between the liquid level L in the vessel l and the outlet of said collecting pipe 26, i.e., the distance over which the frozen particles are drawn up above the liquid level L) was 350 mm. The output of the stirring heater 38 was 80 W and that of the lifting heater 30 was 500 W. A fluid of water mixed with nitrogen gas was atomized by an atomizer 4 under a pressure of 2.5 kg/cm² G (water flow 0.2 l/min., nitrogen gas flow l l/min) and, as a result, ice particles l with sizes 200-300 μm were produced. The ice particles were collected at the rate of l50 g/min with satisfactory results.

In the above test, the quantity of the required refrigerant gas to be generated, or the output of the lifting heater 30, was calculated as follows.

For Hp of 350 mm, the lifting gas required is determined to be about l05 m³/min. m² in the graphic diagram shown as Fig. l3. A collecting pipe 26 has a cross-sectional area of about 4.l × l0⁻⁴ m² "stainless steel pipe, Japan Industrial Standard Code No G 3459, size ¾ inch". Accordingly, the lifting gas required in the collecting pipe 26, converted in terms of the temperature of liquid nitrogen, is:

$$105 (m^3/m^2 \ min.) \times 4.1 \times 10^{-4} \ (m^2) \times \frac{273 - 196}{273}$$

$$= 0.0212 \ (m^3/min.) = 7.2 \ (m^3/h)$$

the heat required for vaporizing liquid nitrogen being

$$H = 7.2 (m^3/h) \times 1.25 \ (kg \ N_2/m^3) \times 47.2 \ (Kcal/kg \ N_2) = 424.8 \ (Kcal/h).$$

Accordingly, the output of the lifting heater 30 is:
424.8 divided by 860 (Kcal/KWH) is about 500 W.

Differing from frozen particles-collecting means of the mechanical type, such as one using a screw conveyor which was described earlier, the alternative forms which have been described up to now are, as it were, similar to the air lift pump in principle, having no parts sliding in the refrigerant liquid and therefore involving no problems technically or concerning maintenance, so that in practice they provide advantages in that the structure is so simple and yet frozen particles are collected smoothly and satisfactorly.

## Claims

l. A method of producing microfine frozen particles, comprising the steps of directing an atomised mixture of liquid and a gas toward a refrigerant liquid while the refrigerant liquid is given kinetic energy so that ripples are formed at the surface, and collecting the microfine frozen particles produced thereby from said refrigerant liquid.

2. Apparatus for producing fine frozen particles comprising a vessel for containing a refrigerant liquid, means for making ripples at the surface of the refrigerant liquid an atomiser for atomising toward said refrigerant liquid, a mixture of a liquid to be frozen and a gas and a means for collecting frozen particles out of the refrigerant liquid in said vessel.

8

3. Apparatus as claimed in claim 2 further including means for controlling the level of the refrigerant liquid in said vessel.

4. Apparatus as claimed in claim 2 or 3 wherein said means for collecting frozen particles comprises an endless conveyor or a screw conyeyor having one end on the refrigerant liquid in said vessel and another end extends to a position outside said vessel.

5. Apparatus as claimed ion claim 2 or 3 wherein said means for collecting frozen particles comprises:
a. frozen particle-collecting pipe whose lower end opens as an inlet in the refrigerant liquid in said vessel nd whose upper ends opens as an outlet above the liquid level in the refrigerant vessel and outside said vessel, the frozen particle-collecting pipe having at its lower end a bubble-generating device for causing the refrigerant liquid to form bubbles to produce a rising current inside the frozen particle-collecting pipe;
means located to separate the frozen particles from the refrigerant liquid discharged from the outlet of the frozen particle-collecting pipe, and
a return pipe for returning separated refrigerant liquid into said refrigerant vessel,
the apparatus being arranged such that when the bubble-generating device is operating, the liquid head pressure between the position of the bubble-generating device and the liquid level in said refrigerant vessel is large relative to the liquid head pressure between the position of the bubble-generating device and the level of the outlet of the frozen particle-collecting pipe.

6. Apparatus as claimed in claim 5 wherein said bubble-generating device is a heater for providing heat energy to the refrigerant liquid in the frozen particle-collecting pipe.

7. Apparatus as claimed in claim 5 wherein said bubble-generation device is a means for injecting a gas into the refrigerant liquid in the frozen particle-collecting pipe.

## Patentansprüche

1. Verfahren zur Herstellung mikrofeiner gefrorener Partikel mit den Verfahrensschritten Erzeugen der Strömung eines atomisierten Gemisches aus einer Flüssigkeit und einem Gas gegen eine Kühlflüssigkeit, während der Kühlflüssigkeit eine kinetische Energie vermittelt wird, um ihre Oberfläche zu kräuseln und Trennen der dabei entstehenden mikrofeinen gefrorenen Partikel von der Kühlflüssigkeit.

2. Vorrichtung zur Herstellung feiner gefrorener Partikel, die einen Kessel zur Aufnahme einer Kühlflüssigkeit, ein Mittel zum Kräuseln der Oberfläche der Kühlflüssigkeit und einen Zerstäuber zum Anblasen gegen die Kühlflüssigkeit, ein Gemisch aus einer zu gefrierenden Flüssigkeit und einem Gas und ein Mittel zum Sammeln gefrorener Partikel außerhalb der Kühlflüssigkeit in dem Kessel enthält.

3. Vorrichtung wie in Anspruch 2 beansprucht, die weiter ein Mittel zum Steuern des Niveaus der Kühlflüssigkeit in dem Kessel enthält.

4. Vorrichtung wie in Anspruch 2 oder 3 beansprucht, bei der das Mittel zum Sammeln gefrorener Partikel einen Band- oder einen Schraubenförderer enthält, dessen eines Ende sich über der Kühlflüssigkeit in dem Kessel und dessen anderes Ende sich in einem Bereich außerhalb des Kessels befindet.

5. Vorrichtung wie in Anspruch 2 oder 3 beansprucht, bei der das Mittel zum Sammeln gefrorener Partikel enthält:
ein Sammelrohr zum Sammeln gefrorener Partikel, dessen unteres Ende als Einlaßöffnung über der Kühlflüssigkeit in dem Kessel sich befindet und dessen oberes Ende als Auslaß sich über dem Flüssigkeitsspiegel im Kühlmittelkessel und außerhalb dieses Kessels befindet, wobei das Sammelrohr zum Sammeln gefrorener Partikel an seinem unteren Ende mit einer Blasen erzeugenden Vorrichtung versehen ist, um die Kühlflüssigkeit zur Blasenbildung zu veranlassen, um dadurch eine nach oben gerichtete Strömung innerhalb des Sammelrohres zum Sammeln gefrorener Partikel zu erzeugen;
ein Mittel in einer Anordnung zum Trennen der gefrorenen Partikel von der Kühlflüssigkeit nach dem Verlassen des Auslasses des Sammelrohres zum Sammeln der gefrorenen Partikel und ein Rückführungsrohr zur Rückführung der Kühlflüssigkeit nach dem Abtrennen der gefrorenen Partikel in den Kühlkessel, wobei die Vorrichtung so angeordnet ist, daß wenn die Blasen bildende Vorrichtung im Betrieb ist, der Flüssigkeitsspitzendruck zwischen dem Bereich der Blasen bildenden Vorrichtung und dem Flüssigkeitsspiegel im Kühlkessel hoch ist relativ zum Flüssigkeitsspitzendruck zwischen dem Bereich der Blasen bildenden Vorrichtung und dem Niveau des Auslasses des Sammelrohres zum Sammeln der gefrorenen Partikel.

6. Vorrichtung wie in Anspruch 5 beansprucht, bei der die Blasen bildende Vorrichtung ein Erhitzer ist, um Heizenergie auf die Kühlflüssigkeit im Sammelrohr zum Sammeln gefrorener Partikel zu übertragen.

7. Vorrichtung wie in Anspruch 5 beansprucht, bei der die Blasen bildende Vorrichtung ein Mittel zum Injizieren eines Gases in die Kühlflüssigkeit im Sammelrohr zum Sammeln gefrorener Partikel ist.

## Revendications

1. Procédé pour produire des particules congelées microfines comprenant les étapes consistant à: diriger un mélange atomisé d'un liquide et d'un gaz vers un liquide réfrigérant alors que ce liquide réfrigérant reçoit une énergie cinétique de manière que se forment des rides sur sa surface, et recueillir les particules congelées microfines ainsi produites à partir dudit liquide réfrigérant.

2. Appareil pour produire des particules congelées microfines, comprenant un récipient pour contenir un liquide réfrigérant, des moyens pour former des rides sur la surface du liquide réfrigérant, un atomiseur pour atomiser vers ledit liquide réfrigérant le mélange d'un liquide à réfrigérer et d'un gaz, et un moyen pour recueillir les particules congelées hors du liquide réfrigérant dans ledit récipient.

3. Appareil selon la revendication 2, comprenant en outre des moyens pour régler le niveau du liquide réfrigérant dans ledit récipient.

4. Appareil selon la revendication 2 ou 3, dans lequel ledit moyen pour recueillir les particules congelées comprend un convoyeur sans fin ou un convoyeur à vis dont une extrémité se trouve dans le liquide réfrigérant dans ledit récipient et dont l'autre extrémité s'étend vers une position située à l'extérieur dudit récipient.

5. Appareil selon la revendication 2 ou 3, dans lequel ledit moyen pour recueillir les particules congelées comprend:

un tuyau collecteur de particules congelées dont l'extrémité inférieure s'ouvre pour former une entrée dans le liquide réfrigérant dans ledit récipient et dont l'extrémité supérieure s'ouvre en tant que sortie au-dessus du niveau du liquide dans le récipient à réfrigérant et à l'extérieur dudit récipient, le tuyau collecteur de particules congelées comprenant à son extrémité inférieure un dispositif générateur de bulles pour amener le liquide réfrigérant à former des bulles et à produire un courant montant à l'intérieur du tuyau collecteur de particules congelées;

un moyen disposé de façon à séparer les particules congelées du liquide réfrigérant déchargé par la sortie du tuyau collecteur de particules congelées, et

un tuyau de retour pour renvoyer le liquide réfrigérant séparé dans ledit récipient à réfrigérant,

l'appareil étant agencé de manière que lorsque le dispositif générateur de bulles fonctionne, la pression du liquide entre la position du dispositif générateur de bulles et le niveau du liquide dans le récipient à réfrigérant est élevée par rapport à la pression du liquide entre la position du dispositif générateur de bulles et le niveau de la sortie du tuyau collecteur de particules congelées.

6. Appareil selon la revendication 5, dans lequel ledit dispositif générateur de bulles est un élément chauffant pour fournir l'énergie de chauffage au liquide réfrigérant dans le tuyau collecteur de particules congelées.

7. Appareil selon la revendication 5, dans lequel ledit dispositif générateur de bulles est un moyen pour injecter un gaz dans le liquide réfrigérant dans le tuyau collecteur de particules congelées.

# FIG.1

**FIG.2**

1

3d

3a

**FIG.3**

1

L  3d  2

3a

**FIG.4A**

21

L  2

20

20

1

FIG.4B

FIG.4C

FIG.4D

*FIG.5*

*FIG.6*

*FIG.7*

# FIG.8

The quantity of water as supplied = 6 ℓ/h
The diameter of the nozzle = 0·5 mm ∅

## FIG.9

## FIG.10

FIG.11

FIG.14

FIG.15

# FIG.12A

# FIG.12B

FIG.13

The lower end of the collecting pipe is submerged 30 cm deep

The lower end of the collecting pipe is submerged 20 cm deep

The height Hp(cm) over which the frozen particles drawn up above the liquid level.

The quantity of gas as injected $(m^3/m^2 \cdot min.)$

EP 0 225 081 B1